# EUROPEAN PATENT APPLICATION

(11) **EP 4 711 392 A1**
(43) Date of publication of application: **18.03.2026**
(21) Application number: 24806401.6
(22) Date of filing: 07.05.2024
(51) Int. Cl.: C08F 283/00, C08F 283/10, C08F 2/48, C09D 175/14, C09D 163/10, C03C 25/465

(54) **PHOTOCURABLE COMPOSITION AND USE THEREOF**

(30) Priority: 12.05.2023 CN 202310541022
(71) Applicant: Phichem Corporation, Shanghai 201908 (CN)
(72) Inventor: SONG, Shuguo, Shanghai 201908 (CN); ZHANG, Songya, Shanghai 201908 (CN); QIU, Yiqun, Shanghai 201908 (CN); WU, Yan, Shanghai 201908 (CN); WANG, Miao, Shanghai 201908 (CN); QIAO, Jianghong, Shanghai 201908 (CN)
(74) Representative: Serjeants LLP
(86) International application number: PCT/CN2024/091360
(87) International publication number: WO 2024/235046

(57) **Abstract**

The present invention provides a photocurable composition, comprising: a photocurable oligomer, a photocurable active monomer and a photoinitiator, wherein the photoinitiator comprises at least one compound represented by general formula I. Applying the photocurable composition to optical fiber coating can significantly increase the curing speed while effectively mitigating the volatilization problem occurring during drawing processes. The present invention further provides the use of the photocurable composition as optical fiber coating or optical fiber coloring coating.

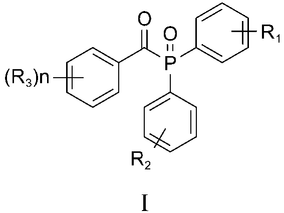

## Description

### TECHNICAL FIELD

The present invention relates to the field of photo curing technology, particularly to photocurable composition and use thereof.

### BACKGROUND

Optical fibers are key materials for the infrastructure construction of information industry, especially the key transmission carrier and core component of optical fiber communication, and play an important supporting role in the national economy.

Optical fiber is a dielectric cylindrical optical waveguide that can confine and guide light waves to propagate along its axis either within the core or near its surface. Typically, optical fiber is composed of a glass core layer, a glass cladding layer, and an organic coating layer. The glass components of communication single-mode or multi-mode optical fibers are generally composed of high-purity silicon dioxide doped with germanium dioxide. Quartz glass fiber has high longitudinal tensile strength, but it is brittle and prone to fracture upon bending. At the same time, quartz glass itself is not resistant to moisture and acidic or alkaline corrosive gases or liquids in the environment. In order to make quartz glass fiber practical, the outer surface of the glass fiber is generally coated with one or more layers of organic polymer materials (commonly referred to as optical fiber coating materials), effectively protecting the quartz glass fiber. This not only improves the environmental reliability of the quartz glass fiber but also improves its optical performance.

With the development of the optical fiber industry, photocurable coatings have been increasingly applied in optical fibers. Currently, the optical fiber inner coating, optical fiber outer coating, optical fiber coloring layer, optical fiber ribbon coating and optical fiber tight-buffered coating are all formed by the photocurable coating resins under specific process conditions through ultraviolet light irradiation.

In the existing technologies, among the photocurable compositions used in the field of optical fiber materials, diphenyl-(2,4,6-trimethylbenzoyl)phosphine oxide (also known as: photoinitiator TPO) is universally used as photoinitiator. TPO has good properties such as broad absorption range, high initiation efficiency and low yellowing after curing in the 200 nm-400 nm ultraviolet band and is particularly suitable for the production of optical fiber coating that requires rapid curing. Moreover, due to the current development of LED curing technology, the LED ultraviolet light sources are generally used at relatively single wavelengths and the three most commonly used bands in optical fibers are 365 nm, 385 nm and 395 nm, so TPO is the mainly used photoinitiator.

Meanwhile, with the development of optical fiber technology, in order to increase production capacity, the optical fiber and cable manufacturers have increasingly higher requirements for the high-speed drawing which has higher demands on the cooling, coating and curing of optical fibers, and at the same time, the requirements for the coating resins of optical fibers are also getting higher and higher. Due to the increase in the drawing speed of optical fibers, the exposure time of the photocurable composition to light irradiation during the curing process decreases. The volatilized amount of volatile substances during the resin curing process increases. With the accumulation of volatile substances, the surface of the photo-curing equipment is very likely to be covered by volatile substances, especially when the surface of the photo-curing lampshade is covered by volatile substances, it will affect the curing effect of the photocurable composition, compromising the performance of optical fibers.

The publication text of the Chinese invention patent application CN101549962A discloses a method and device for removing the volatile substances from the coating curing process during optical fiber drawing, and the Chinese utility model patent CN214654487U discloses a device for removing the volatile substances from the coating curing process during optical fiber drawing, both of which indicate that the optical fiber manufacturers hope to achieve the goal of reducing volatile substances through equipment adjustment.

Based on the problems existing in the prior art, the present invention provides a photocurable composition, in which a more environmentally friendly and efficient photoinitiator is employed to replace photoinitiator TPO, and along with other substances in the formulations, the volatilization problem of the coating under high-speed drawing conditions is also effectively improved.

### SUMMARY OF THE INVENTION

**Object of the present invention:** the object of the present invention is to provide a photocurable composition, when the photocurable composition is applied to the optical fiber coating, it can significantly increase the curing speed while effectively mitigating volatilization issues during the drawing process.

Further, the object of the present application is also to provide the use of the photocurable composition.

**Technical Solutions:** a photocurable composition comprising: a photocurable oligomer, a photocurable active monomer and a photoinitiator, wherein the photoinitiator comprises at least one compound represented by general formula I: 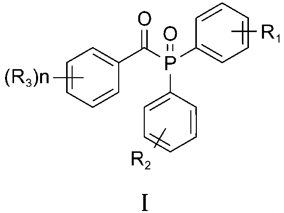
wherein, R₁, R₂ and R₃ are the same or different, and each independently selected from substituted or unsubstituted C₁₋₅ alkyl or alkoxyl, wherein the substituent is selected from C₁₋₃ alkyl or alkoxyl;
n = 1, 2 or 3.

C₁₋₅ alkyl is selected from methyl, ethyl, propyl, isopropyl, N-butyl, isobutyl, sec-butyl, tert-butyl, n-amyl, -CH(CH₃)CH₂CH₂CH₃, -CH₂CH(CH₃)CH₂CH₃, -CH₂CH₂CH(CH₃)₂, -CH(C₂H₅)CH₂CH₃, -C(CH₃)₂CH₂CH₃, -CH(CH₃)CH(CH₃)₂ and -CH₂C(CH₃)₃;
C₁₋₅ alkoxyl is selected from methoxy, ethoxy, propoxy, butoxy and pentyloxy.

In some embodiments of the present invention, R₁, R₂ and R₃ each is independently selected from methyl, ethyl, propyl or isopropyl; in some embodiments of the present invention, R₃ is preferably methyl.

After the introduction of the above-mentioned alkyl groups into the structure, the thermal stability of the initiator is further enhanced, which can reduce the volatilization of the initiator during the photo-curing process.

In some embodiments of the present invention, the substitution position of R₃ may be ortho position, meta position or para position; in some embodiments of the present invention, the substitution position of R₃ is preferably ortho position and para position.

In some embodiments of the present invention, n is preferably 3.

In some embodiments of the present invention, the photoinitiator preferably comprises at least one compound represented by general formula II: 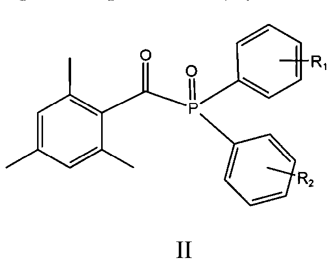 wherein the definitions of R₁ and R₂ are the same as those of the compound represented by the general formula I.

In some embodiments of the present invention, R₁ and R₂ each is independently selected from methyl, ethyl, propyl or isopropyl; in some embodiments of the present invention, it is preferred that R₁ and R₂ each is independently selected from methyl.

In some embodiments of the present invention, the substitution positions of R₁ and R₂ may be ortho position, meta position or para position; in some embodiments of the present invention, the substitution positions of R₁ and R₂ are preferably para position.

In some embodiments of the present invention, R₁ and R₂ each is para-substituted methyl.

When two methyl groups are added to the para-position of the two phenyl rings connected to the phosphorous-oxygen group, the methyl groups and the structure of the phenyl rings form a σ-π hyperconjugation structure. Compared to the conjugation structure of the phenyl ring, the σ-π hyperconjugation structure has a lower conjugation energy and higher activity. Under the condition of free radical formation through light irradiation, it is more likely to initiate polymerization, increasing the cross-linking density of the system and thereby improving the curing efficiency. Additionally, the volatilization of small molecule monomers in the system is also reduced.

In some embodiments of the present invention, the photocurable composition comprises: by weight of the photocurable composition, 35-95 wt.% of photocurable oligomer, 1-50 wt.% of photocurable active monomer and 1-15 wt.% of photoinitiator.

In some embodiments of the present invention, the weight percentage of the photocurable oligomer in the photocurable composition is 35-95%, for example, 35%-90%, 40%-90%, 45%-90%, 50%-90%, 55%-90%, 60%-90%, 65%-90%, 70%-90%, 75%-90%, 80%-90%, 85%-90%, 35%-85%, 40%-85%, 45%-85%, 50%-85%, 55%-85%, 60%-85%, 65%-85%, 70%-85%, 75%-85%, 80%-85%, 35%-80%, 40%-80%, 45%-80%, 50%-80%, 55%-80%, 60%-80%, 65%-80%, 70%-80%, 75%-80%, 35%-75%, 40%-75%, 45%-75%, 50%-75%, 55%-75%, 60%-75%, 65%-75%, 70%-75%, 35%-70%, 40%-70%, 45%-70%, 50%-70%, 55%-70%, 60%-70%, 65%-70%, 35%-65%, 40%-65%, 45%-65%, 50%-65%, 55%-65%, 60%-65%, 35%-60%, 40%-60%, 45%-60%, 50%-60%, 55%-60%, 35%-55%, 40%-55%, 45%-55%, 50%-55%, 35%-50%, 40%-50%, 45%-50%, 35%-45% or 40%-45%.

In some embodiments of the present invention, the photocurable oligomer is selected from at least one of polyurethane acrylate oligomer and epoxy acrylate oligomer.

In some embodiments of the present invention, the polyurethane acrylate oligomer is one or more of monofunctional polyurethane acrylate oligomer, bifunctional polyurethane acrylate oligomer or trifunctional polyurethane acrylate oligomer, and is preferably bifunctional polyurethane acrylate oligomer or trifunctional polyurethane acrylate oligomer.

In some embodiments of the present invention, the epoxy acrylate oligomer is one or more of monofunctional epoxy acrylate oligomer, bifunctional epoxy acrylate oligomer or trifunctional epoxy acrylate oligomer, and is preferably bifunctional epoxy acrylate oligomer.

The polyurethane acrylate oligomer of the present invention is prepared from a diisocyanate and an acrylate containing hydroxyl groups, and during the preparation process, chain extender is added to the reactants to increase the molecular chain length of the polyurethane acrylate oligomer.

In some embodiments of the present invention, the chain extender is selected from at least one of polyester diol, alkyl diol and polyether diol, and is preferably polyether diol.

In some embodiments of the present invention, the polyurethane acrylate oligomer may be a single oligomer, or may be a combination of multiple oligomers.

In some embodiments of the present invention, the diisocyanate is selected from toluene diisocyanate (TDI), isophorone diisocyanate (IPDI), 4,4'-dicyclohexylmethane diisocyanate (HMDI), diphenylmethane diisocyanate (MDI), and hexamethylene diisocyanate (HDI) trimer.

In some embodiments of the present invention, the acrylate containing hydroxyl groups is selected from at least one of hydroxyethyl acrylate (HEA), hydroxypropyl acrylate (HPA), 2-hydroxyethyl methacrylate (HEMA) and 2-hydroxypropyl methacrylate (HPMA).

In some embodiments of the present invention, the epoxy acrylate oligomer is selected from the compounds obtained by reaction of a bisphenol-A based epoxy and a photopolymerizable compound containing carboxyl groups.

The photopolymerizable compound containing carboxyl groups is a compound with a carboxyl group at one end and a photoinitiating double bond at the other end.

In some embodiments of the present invention, the compound with a carboxyl group at one end and a photoinitiating double bond at the other end is acrylate or methylacrylate, and may also be the compound obtained by reaction of anhydride and hydroxyl acrylate.

The anhydride is selected from at least one of succinic anhydride, maleic anhydride, phthalic anhydride and tetrahydrophthalic anhydride.

The hydroxyl acrylate compound is selected from hydroxyethyl acrylate (HEA), hydroxypropyl acrylate (HPA), 2-hydroxyethyl methacrylate (HEMA) and 2-hydroxypropyl methacrylate (HPMA).

The photocurable active monomer comprises at least one of monofunctional photocurable active monomer and multifunctional photocurable active monomer. In some embodiments of the present invention, the multifunctional photocurable active monomer is bifunctional photocurable active monomer and trifunctional photocurable active monomer

The monofunctional photocurable active monomer comprises 2-phenoxyethyl acrylate (PHEA), isobornyl acrylate (IBOA), Isodecyl acrylate, iso-octyl acrylate, polyethylene glycol o-phenylphenyl ether acrylate (OPPEA), nonylphenol ethoxylate acrylate and N-vinylcaprolactam.

If a monofunctional photocurable active monomer is added, the upper limit of the addition amount is 36% (by weight of the photopolymerizable composition). A further preferred upper limit is 20% (by weight of the photopolymerizable composition). If the addition amount of monofunctional monomers is too high, the curing speed may be affected, and the volatility is stronger.

The bifunctional photocurable active monomer comprises 1,6-hexanediol diacrylate (HDDA), tripropylene glycol diacrylate (TPGDA) and dipropylene glycol diacrylate (DPGDA).

The trifunctional photocurable active monomer comprises trimethylolpropane triacrylate (TMPTA).

The photoinitiator of the present invention comprises one or more compounds of general formula I.

In some embodiments of the present invention, the photoinitiator preferably comprises at least one compound of general formula II.

In some embodiments of the present invention, by weight of the photocurable composition, the addition ratio of general formula I is 0.3-10% (for example, 0.5%, 1%, 2%, 3%, 4%, 5%, 6%, 7%, 8% or 9%).

In some embodiments of the present invention, in the case that no coloring agent is added, by weight of the photocurable composition, the addition ratio of general formula I is preferably 0.3-6% (for example, 0.5%, 1%, 2%, 3%, 4% or 5%), and excessive addition may cause significant yellowing problems.

In some embodiments of the present invention, the photoinitiator further comprises one or more of the following substances: phenylbis(2,4,6-trimethylbenzoyl)phosphine oxide, 1-hydroxycyclohexyl phenyl ketone, 2-hydroxy-2-methyl-1-phenyl-1-propyl ketone, diphenyl ketone, 2,2-dimethoxy-2-phenylacetophenone, 2-hydroxy-4'-(2-hydroxyethoxy)-2-methylpropiophenone, 2-isopropylthioxanthone and 2,4-diethyl thiazolone, to improve the curing speed.

The additive may be one or more of silane coupling agent, defoaming agent, dispersing agent, leveling agent, or active amine initiator. The additive does not comprise coloring agent.

The silane coupling agent may comprise trimethoxysilyl propanethiol, 3-chloropropyltrimethoxysilane.

The defoaming agent may comprise polyether-modified silicone defoaming agent, non-silicone polymer defoaming agent.

The dispersing agent may comprise solution of copolymers with acidic groups, such as BYK110; acrylic block copolymer, such as EFKA4310.

The leveling agent may comprise silicone leveling agent, acrylate leveling agent.

The active amine initiator may comprise ethylenediamine, amine-modified acrylate, which can further optimize the surface curing effect.

In some embodiments of the present invention, the photocurable composition comprises, by weight of the photocurable composition, 0.01-10% (for example, 0.01% to 5%, 0.05% to 10%, 0.1% to 10%, 0.1% to 5%, 0.5% to 10%, 0.5% to 5%, 1% to 5% or a value within one of these ranges) of additive. The specific example may comprise 0.01%, 0.05%, 0.1%, 0.25%, 0.5%, 0.75%, 1%, 2%, 3%, 4%, 5%, 6%, 7%, 8%, 9%,10% or a range between any two of these values.

The photocurable composition may be additionally added with coloring agent, and by weight of the photocurable composition, the addition ratio of the coloring agent may be 0.1-8%.

The coloring agent may be organic or inorganic color powder, and the preferred color of the color powder may comprise white, red, yellow, blue, green, purple, and black.

The type and addition amount of the coloring agent may be adjusted as appropriate according to the coloring requirements.

The coloring agent is selected from at least one of titanium dioxide, permanent red, Rubine 4B, benzidine yellow, phthalocyanine blue, phthalocyanine green, permanent violet and carbon black.

In some embodiments of the present invention, the coloring agent is selected from titanium dioxide and phthalocyanine blue.

After adding the coloring agent, due to the absorption of radiation by the color powder, the curing effect of the composition may be affected. Therefore, the addition amount of the compound of general formula I is further increased to 1-8 wt.% (for example, 2 wt.%, 3 wt.%, 4 wt.%, 5 wt.%, 6 wt.% or 7 wt.%) to ensure the appropriate curing degree while also improving the volatility of such composition.

In some embodiments of the present invention, the appropriate wavelength range of the light source for the photocurable composition is 200-450 nm.

The present invention further provides the use of the photocurable composition as optical fiber coating or optical fiber coloring coating.

The optical fiber coating is selected from at least one of optical fiber inner coating, optical fiber outer coating, optical fiber ribbon coating or optical fiber tight-buffered coating.

### DETAILED DESCRIPTION OF THE EMBODIMENTS

The present invention will be illustrated by combining the detailed embodiments below. It should be noted that, the following examples are exemplary embodiments of the present invention, which are only used to illustrate the present invention, not to limit it. Other combinations and various modifications within the conception of the present invention are possible without departing from the subject matter or scope of the present invention.

In the present application, unless otherwise specified, the proportions used herein are weight ratios, and temperatures are Celsius temperatures.

### Test Methods:

Test Method for volatile matter: the glass slide is placed in an oven and dries for 30 minutes, then removed out of the oven and put in a desiccator and cooled to room temperature. The glass slide is weighed and recorded as M₁. The coating sample is applied onto the glass slide to form a film of appropriate thickness. The total weight of the glass slide and the coating is measured and recorded as M₂. The glass slide is placed in a container box with a top layer of high-purity quartz glass and nitrogen is purged through for 1 minute to expel the air inside the container. Then, it is cured under a UV light source, where the energy of the light source is set at 1500 mJ/cm², and the speed of the conveyor belt is set at 17 m/min. After the curing is completed, nitrogen is purged for 1 minute to completely remove the volatile gases. The total weight of the glass slide and the cured coating is weighed and recorded as M₃. At this time, the volatile matter of the sample = (M₂ - M₃)/( M₂ - M₁)*100%.

Test method for curing degree: after the above test for volatile matter, the surface of the sample is scanned by an infrared spectrometer for infrared spectra. The absorption peak at 1410 cm⁻¹ in the infrared spectrum is integrated, and then the standard absorption peak is integrated (*e.g*., the absorption peak at 1730 cm⁻¹). The ratio of the integrated areas of the two absorption peaks, S1410/S1730, is defined as AU sample. The uncured coating sample was tested in the same way, and the ratio of the integrated areas of the two absorption peaks, L1410/L1730, is defined as AU liquid. The curing degree of the coating film can be calculated by the curing degree calculation formula: (AU liquid - AU sample)/AU liquid)* 100%. The curing degree is used to characterize the curing speed. The higher the integrated degree, the faster the curing speed.

The specific selections of the compounds in the Examples of the present invention are as follows:
Photocurable oligomer:
Oligomer 1: polyurethane acrylate oligomer, obtained by the reaction of directly capping toluene diisocyanate (TDI) with 2-hydroxypropyl methacrylate (HPMA).
Oligomer 2: polyether-based polyurethane acrylate oligomer, obtained by the reaction of 1000 molecular weight polyether diol with diphenylmethane diisocyanate (MDI), followed by end-capping with 2-hydroxyethyl methacrylate (HEMA).
Oligomer 3: epoxy acrylate oligomer, selected from SM6104 epoxy acrylate of Jiangsu Sanmu Group Corporation.
Oligomer 4: modified epoxy acrylate, obtained by the reaction of maleic anhydride with 2-hydroxyethyl methacrylate (HEMA) and then with bisphenol-A based epoxy.

Photoinitiator:
Photoinitiator 1: the compound of general formula II, wherein R₁ and R₂ each is para-substituted methyl.
Photoinitiator 2: 1-hydroxycyclohexyl phenyl ketone
Photoinitiator 3: 2,4,6-trimethyl benzoyldiphenyl phosphine oxide (TPO).

Additive:
Active amine initiator: amine-modified acrylate, selected from Sartomer CN550.

**Table 1**

| | | Example 1 | Example 2 | Example 3 | Example 4 | Example 5 | Example 6 | Example 7 | Example 8 |
|---|---|---|---|---|---|---|---|---|---|
| Photocurable oligomer | Oligomer 1 | 10 | | | 10 | | | | |
| | Oligomer 2 | | 30 | 55 | 10 | 90 | 95 | 10 | 30 |
| | Oligomer 3 | | 25 | | | | | 25 | 30 |
| | Oligomer 4 | 35 | | | 50 | | | | |
| Photocurable active monomer | PHEA | 36 | 30 | 25 | 20 | 3 | 0.7 | 10 | 5 |
| | TPGDA | 14 | 10 | 10 | 5 | 2 | 0.3 | 10 | 5 |
| | TMPTA | | | | | | | 26 | 15 |
| Photoinitiator | Initiator 1 | 3 | 3 | 6 | 3 | 3 | 2 | 8 | 4 |
| | Initiator 2 | 1 | 1 | 3 | 1 | 1 | 1 | 4 | 4 |
| Additive | Amine-modified acrylate | 1 | 1 | 1 | 1 | 1 | 1 | 1 | 1 |
| Coloring agent | Titanium dioxide | 0 | 0 | 0 | 0 | 0 | 0 | 3 | 3 |
| | Phthalocyanine blue | 0 | 0 | 0 | 0 | 0 | 0 | 3 | 3 |
| Performance test | Curing degree | 92% | 93% | 93% | 95% | 95% | 95% | 95% | 95% |
| | Volatile matter content | 0.75% | 0.58% | 0.52% | 0.28% | 0.24% | 0.18% | 0.27% | 0.25% |

**Table 2**

| | | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|
| Photocurable oligomer | Oligomer 1 | | | | | | | 10 | | |
| | Oligomer 2 | 30 | 30 | 30 | 30 | 30 | 30 | | 30 | 10 |
| | Oligomer 3 | 25 | 25 | 25 | 25 | 26 | 24 | | 25 | 25 |
| | Oligomer 4 | | | | | | | 35 | | |
| Photocurable active monomer | PHEA | 38 | 20 | 30 | 30 | 30 | 30 | 36 | 30 | 10 |
| | TPGDA | 2 | 20 | 10 | 10 | 10 | 10 | 14 | 10 | 10 |
| | TMPTA | | | | | | | | | 26 |
| Photoinitiator | Initiator 1 | 3 | 3 | 4 | 0.5 | 3 | 3 | 0.1 | | |
| | Initiator 2 | 1 | 1 | | 3.5 | 1 | 1 | 3.9 | 1 | 4 |
| | Initiator 3 | | | | | | | | 3 | 8 |
| Additive | Silicone leveling agent | | | | | | 1 | | | |
| | Amine-modified acrylate | 1 | 1 | 1 | 1 | | 1 | 1 | 1 | 1 |
| Coloring agent | Titanium dioxide | | | | | | | 0 | | 3 |
| | Phthalocyanine blue | | | | | | | 0 | | 3 |
| Performance test | Curing degree | 91% | 94% | 93% | 91% | 92% | 93% | 83% | 86% | 87% |
| | Volatile matter content | 0.80% | 0.38% | 0.55% | 0.78% | 0.79% | 0.57% | 1.32% | 1.45% | 1.37% |

From the above Examples 1-12 and Comparative Examples 1-3 in Table 1 and Table 2, it can be seen that, the photocurable composition comprising the compound of general formula I provided in the present invention has a higher curing degree and a smaller volatile matter content during the curing process, and has a good application prospect in the optical fiber manufacturing industry.

The above embodiments are only intended to illustrate the technical concepts and the features of the present invention, the purpose thereof is to enable those skilled in the art to understand and implement the content of the present invention, rather than to limit the protection scope of the present invention. Any equivalent variations or modifications made in accordance with the essence of the present invention should be encompassed within the protection scope of the present invention.

## Claims

1. A photocurable composition comprising: a photocurable oligomer, a photocurable active monomer and a photoinitiator, wherein the photoinitiator comprises at least one compound represented by general formula I: 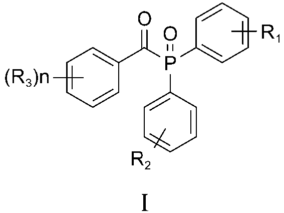
wherein, R₁, R₂ and R₃ are the same or different, and each independently selected from substituted or unsubstituted C₁₋₅ alkyl or alkoxyl, wherein the substituent is selected from C₁₋₃ alkyl or alkoxyl;
n = 1, 2 or 3.

2. The photocurable composition of claim 1, **characterized in that**, the photocurable composition comprises: by weight of the photocurable composition, 35-95 wt.% of the photocurable oligomer, 1-50 wt.% of the photocurable active monomer and 1-15 wt.% of the photoinitiator.

3. The photocurable composition of claim 1, **characterized in that**, R₁, R₂ and R₃ each is independently selected from methyl, ethyl, propyl or isopropyl.

4. The photocurable composition of claim 1, **characterized in that**, the photocurable oligomer is selected from at least one of polyurethane acrylate oligomer and epoxy acrylate oligomer.

5. The photocurable composition of claim 4, **characterized in that**, the polyurethane acrylate oligomer is one or more of monofunctional polyurethane acrylate oligomer, bifunctional polyurethane acrylate oligomer or trifunctional polyurethane acrylate oligomer.

6. The photocurable composition of claim 4, **characterized in that**, the epoxy acrylate oligomer is one or more of monofunctional epoxy acrylate oligomer, bifunctional epoxy acrylate oligomer or trifunctional epoxy acrylate oligomer.

7. The photocurable composition of claim 4, **characterized in that**, the polyurethane acrylate oligomer is obtained by reaction of a diisocyanate and an acrylate containing hydroxyl groups.

8. The photocurable composition of claim 4, **characterized in that**, the epoxy acrylate oligomer is obtained by reaction of a bisphenol-A based epoxy and a photopolymerizable compound containing carboxyl groups.

9. The photocurable composition of claim 1, **characterized in that**, the photoinitiator comprises one or more compounds of general formula I.

10. The photocurable composition of claim 1, **characterized in that**, the photoinitiator further comprises one or more of the following substances: phenylbis(2,4,6-trimethylbenzoyl)phosphine oxide, 1-hydroxycyclohexyl phenyl ketone, 2-hydroxy-2-methyl-1-phenyl-1-propyl ketone, diphenyl ketone, 2,2-dimethoxy-2-phenylacetophenone, 2-hydroxy-4'-(2-hydroxyethoxy)-2-methylpropiophenone, 2-isopropylthioxanthone and 2,4-diethyl thiazolone.

11. The photocurable composition of claim 1, **characterized in that**, the photocurable composition further comprises additive.

12. The photocurable composition of claim 1, **characterized in that**, the photocurable composition further comprises coloring agent.

13. Use of the photocurable composition of any one of claims 1-11 as optical fiber coating or optical fiber coloring coating.

14. The use of claim 13, wherein the optical fiber coating is selected from at least one of optical fiber inner coating, optical fiber outer coating, optical fiber ribbon coating or optical fiber tight-buffered coating.
